# EUROPÄISCHE PATENTSCHRIFT

(11) **EP 3 079 945 B1**
(45) Veröffentlichungstag und Bekanntmachung des Hinweises auf die Patenterteilung: **21.02.2018**
(21) Anmeldenummer: 14808632.5
(22) Anmeldetag: 08.12.2014
(51) Int. Cl.: B60N 2/44, B60N 2/12

(54) **BETÄTIGUNGSEINRICHTUNG FÜR EINEN FAHRZEUGSITZ UND FAHRZEUGSITZ**
ACTUATING DEVICE FOR A VEHICLE SEAT AND VEHICLE SEAT
DISPOSITIF D'ACTIONNEMENT POUR UN SIÈGE DE VÉHICULE ET SIÈGE DE VÉHICULE

(30) Priorität: 11.12.2013 DE 102013225595; 27.03.2014 DE 102014205725
(43) Veröffentlichungstag der Anmeldung: 19.10.2016
(73) Patentinhaber: Adient Luxembourg Holding S.à r.l., 2453 Luxembourg (LU)
(72) Erfinder: WAGNER, Marc, 67657 Kaiserslautern (DE); PFAFF, Heiko, 66894 Langwieden (DE); CONRAD, Christian, 67706 Krickenbach (DE); CRUMMENAUER, Lars, 66629 Freisen (DE); BERGMANN, Annerose, 67685 Erzenhausen (DE); KRAEMER, Andreas, 67659 Kaiserslautern (DE)
(74) Vertreter: Liedhegener, Ralf
(86) Internationale Anmeldenummer: PCT/EP2014/076818
(87) Internationale Veröffentlichungsnummer: WO 2015/086487

(56) Entgegenhaltungen:
- DE-B3- 10 328 504
- DE-B3-102008 050 468
- JP-A- 2008 001 139
- US-A1- 2007 046 091

## Beschreibung

Die Erfindung betrifft eine Betätigungseinrichtung für einen mindestens einen Verriegelungsmechanismus aufweisenden Fahrzeugsitz, wobei die Betätigungseinrichtung zum Entriegeln des mindestens einen Verriegelungsmechanismus einen an einem Gehäuse gelagerten Betätigungsgriff aufweist, und wobei ein Verbindungsmittel die Betätigungseinrichtung mit dem mindestens einen Verriegelungsmechanismus koppelt, sowie einen Fahrzeugsitz.

### Stand der Technik

Aus der DE 10 2008 050 468 B3 ist ein Fahrzeugsitz bekannt, der aus einer Gebrauchsstellung in eine Einstiegsstellung und zurück überführbar ist. In der Einstiegsstellung ist der Fahrzeugsitz in eine gegenüber der Gebrauchsstellung vordere Position geschwenkt und ermöglicht so einen einfacheren Zugang zu einer hinteren Sitzreihe. Sowohl die Gebrauchsstellung als auch die Einstiegsstellung sind mittels eines Verriegelungsmechanismus, insbesondere eines Schlosses, gesichert. Der Verriegelungsmechanismus muss sowohl vor dem Vorschwenken des Fahrzeugsitzes in die Einstiegsstellung entriegelt werden, als auch vor dem Zurückschwenken aus der Einstiegsstellung in die Gebrauchsstellung. Die Bewegungsrichtungen des Fahrzeugsitzes während dieser zwei Schwenkvorgänge sind somit entgegengesetzt.

Durch Benutzung sind weitere gattungsgemäße Fahrzeugsitze bekannt, die zur Entriegelung eines Verriegelungsmechanismus eine Betätigungseinrichtung mit einem Betätigungsgriff aufweisen, dessen Betätigung in genau eine Bedienrichtung zum Öffnen des Verriegelungsmechanismus führt. Bei entgegengesetzten Schwenkvorgängen des Fahrzeugsitzes, beispielsweise aus einer Gebrauchsstellung in eine Einstiegsstellung und zurück, liegt die Bedienrichtung des Betätigungsgriffs in einer der beiden Schwenkrichtungen des Fahrzeugsitzes. In der anderen der beiden Schwenkrichtungen verlaufen die Bedienrichtung des Betätigungsgriffs und die Schwenkrichtung des Fahrzeugsitzes entgegengesetzt, so dass die Bedienergonomie nicht optimal ist.

Aus der DE 103 28 504 B3 ist ein Betätigungselement mit nur einer Bedienrichtung und einem integrierten Indikator bekannt.

Die JP 2008 001139 A offenbart eine Betätigungseinrichtung mit einem zum Entriegeln eines Verriegelungsmechanismus an einem Gehäuse gelagerten Betätigungsgriff. Ein als Bowdenzug ausgeführtes Verbindungsmittel koppelt die Betätigungseinrichtung mit dem Verriegelungsmechanismus. Der Betätigungsgriff ist in zwei unterschiedliche Richtungen betätigbar. Der Verriegelungsmechanismus ist sowohl durch eine Betätigung des Betätigungsgriffs in die eine Richtung, als auch in die andere Richtung entriegelbar. Die Betätigungseinrichtung weist eine relativ zu dem Gehäuse bewegliche Schnittstelle zur Befestigung des Verbindungsmittels auf. Die Schnittstelle ist mit dem Betätigungsgriff wirkverbunden. Bei einer Betätigung des Betätigungsgriffs ist die Bewegungsrichtung der Schnittstelle unabhängig von der Betätigungsrichtung des Betätigungsgriffs.

Aus der US 2007/0046091 A1 ist eine Betätigungseinrichtung mit einem an einem Gehäuse gelagerten Betätigungsgriff bekannt. Der Betätigungsgriff ist drehbar an dem Gehäuse gelagert. Zwei jeweils als Bowdenzug ausgeführte Verbindungsmittel koppeln die Betätigungseinrichtung mit einem Verriegelungsmechanismus. Der Verriegelungsmechanismus ist sowohl durch eine Betätigung des Betätigungsgriffs in die eine Richtung mittels des ersten Bowdenzugs, als auch in die andere Richtung mittels des zweiten Bowdenzugs entriegelbar.

### Aufgabe

Der Erfindung liegt die Aufgabe zu Grunde, eine ergonomisch optimierte Betätigungseinrichtung für einen Fahrzeugsitz der eingangs beschriebenen Art zur Verfügung zu stellen, sowie einen mit einer solchen Betätigungseinrichtung ausgestatteten Fahrzeugsitz bereitzustellen.

### Lösung

Diese Aufgabe wird erfindungsgemäß durch eine Betätigungseinrichtung für einen Fahrzeugsitz mit den Merkmalen des Anspruches 1 und einen Fahrzeugsitz mit den Merkmalen des Anspruches 12 gelöst.

Die Betätigungseinrichtung für einen Fahrzeugsitz mit mindestens einem Verriegelungsmechanismus weist zum Entriegeln dieses mindestens einen Verriegelungsmechanismus einen Betätigungsgriff auf.

Dadurch, dass der Betätigungsgriff in zwei unterschiedliche Richtungen betätigbar ist und der mindestens eine Verriegelungsmechanismus sowohl durch eine Betätigung des Betätigungsgriffs in die eine Richtung als auch durch eine Betätigung des Betätigungsgriffs in die andere Richtung entriegelbar ist, steht für jede Bewegungsrichtung des Fahrzeugsitzes eine in Bewegungsrichtung des Fahrzeugsitzes orientierte Bedienrichtung des Betätigungsgriffs zur Verfügung. Dadurch ist die Betätigungseinrichtung ergonomisch optimiert.

Vorteilhafte Ausgestaltungen, welche einzeln oder in Kombination miteinander eingesetzt werden können, sind Gegenstand der Unteransprüche.

Der Hebel kann in einem unbetätigten Zustand durch ein elastisches Mittel in einer Mittellage gehalten sein, so dass der Hebel aus dieser Mittellage heraus und entgegen einer Kraft des sich spannenden elastischen Mittels wahlweise in eine der beiden Richtungen betätigbar ist. Das elastische Mittel ist vorzugsweise eine Feder, insbesondere eine Schenkelfeder. Das elastische Mittel kann zwischen dem Gehäuse und dem Hebel wirken oder zwischen dem Hebel und einem anderen zu dem Hebel relativbeweglichen Bauteil.

Die Betätigungseinrichtung weist eine relativ zu dem Gehäuse bewegliche Schnittstelle zur Befestigung des Verbindungsmittels auf, die mit dem Betätigungsgriff derart wirkverbunden ist, dass bei einer Betätigung des Betätigungsgriffs die Bewegungsrichtung der Schnittstelle immer gleich und unabhängig von der Betätigungsrichtung des Betätigungsgriffs ist. Die Schnittstelle ermöglicht die Kopplung der Betätigungseinrichtung mit dem mindestens einen Verriegelungsmechanismus mit an sich bekannten Verbindungsmitteln, wie Seilzügen, Bowdenzügen oder anderen an sich bekannten Getriebegliedern. Bevorzugt ist das Verbindungsmittel ein Seilzug oder ein Bowdenzug, da diese vergleichsweise kostengünstig sind und ein Bereich der Schnittstelle zum Einhängen des Seilzugendes oder des Bowdenzugendes einfach und auf an sich bekannte Weise ausgebildet sein kann. Als Verbindungsmittel können ein oder mehrere Seilzüge oder Bowdenzüge dienen. Vorteilhafterweise entspricht die Anzahl der Seilzüge oder Bowdenzüge der Anzahl der Verbindungsmittel.

Das Gehäuse der Betätigungseinrichtung kann ein gesondert für die Betätigungseinrichtung ausgebildetes Gehäuse sein. Dadurch kann die Betätigungseinrichtung modular aufgebaut sein. Das Gehäuse der Betätigungseinrichtung kann jedoch auch in andere Bauteile des Fahrzeugsitzes, beispielsweise eine Lehnenstruktur, integriert sein, was die Anzahl der Bauteile und das Gewicht des Fahrzeugsitzes reduziert.

Der Betätigungsgriff treibt ein mit der Schnittstelle wirkverbundenes Getriebe an, welches Bestandteil der Betätigungseinrichtung ist. Einzelne Getriebeglieder des Getriebes befinden sich bei nicht betätigtem Betätigungsgriff in einer Totpunktlage, insbesondere indem sich zwei Getriebeglieder des Getriebes in einer Strecklage zueinander befinden. Die Totpunktlage bewirkt, dass sich ein in Totpunktlage befindliches Getriebeglied unabhängig von einer Bewegung weiterer Getriebeglieder in nur eine Richtung bewegen kann. Totpunktlagen sind beispielsweise aus Kurbeltrieben bekannt und können getriebetechnisch auf unterschiedliche und an sich bekannte Weise erzeugt werden. So bewegt sich beispielsweise ein in einem oberen Totpunkt befindlicher Kolben eines Verbrennungsmotors unabhängig von der Drehrichtung der Kurbelwelle immer nach unten.

Bei einer bevorzugten Betätigungseinrichtung weist das Getriebe ein mit dem Betätigungsgriff verbundenes Zahnsegment, ein mit dem Zahnsegment kämmendes Zwischenrad, eine an dem Zwischenrad befestigte Schwinge, eine mit der Schwinge verbundene Koppel und einen mit der Koppel verbundenen Exzenter auf. Die Schnittstelle ist vorzugsweise unmittelbar mit dem Exzenter gekoppelt. Das Zwischenrad kann ein Ritzel sein. Das Zwischenrad kann ein Stirnrad sein.

Die Schnittstelle kann ein im Gehäuse der Betätigungseinrichtung drehbar gelagertes Bauteil sein, wobei dieses Bauteil und der Exzenter um dieselbe Drehachse der Schnittstelle drehbar sind. Die Anbindung des Verbindungsmittels an die Schnittstelle ist exzentrisch zu der Drehachse der Schnittstelle. Der Exzenter kann starr mit der Schnittstelle verbunden sein oder mit einem geringen Leerweg auf Mitnahme gekoppelt mit der Schnittstelle verbunden sein. Die Schnittstelle kann als ein Indikator ausgebildet sein, der durch seine Winkellage den Verriegelungszustand des mindestens einen Verriegelungsmechanismus anzeigt. Eine solche Schnittstelle kann somit ein einfaches Bauteil mit mehreren Funktionen sein. Eine Funktion ist das Anbinden des mindestens einen Verbindungsmittels und das Ansteuern des mindestens einen Verriegelungsmechanismus, eine weitere Funktion ist das Anzeigen des Verriegelungszustandes des mindestens einen Verriegelungsmechanismus

Die Erfindung ist nicht auf eine spezielle Ausgestaltung der Schnittstelle beschränkt. Ein beliebig geformtes, um eine erste Drehachse drehbar am Gehäuse gelagertes Bauteil kann die Schnittstelle bilden oder mit der Schnittstelle verbunden sein. Auch der Exzenter kann um die erste Drehachse drehbar am Gehäuse gelagert sein.

Der Exzenter kann drehbar um eine zweite Drehachse mit der Koppel verbunden sein, die Koppel drehbar um eine dritte Drehachse mit der Schwinge verbunden sein, das Zwischenrad und die Schwinge drehbar um eine vierte Drehachse am Gehäuse gelagert sein und das Zahnsegment und der Betätigungsgriff drehbar um eine fünfte Drehachse am Gehäuse gelagert sein. Einzelne der Drehachsen sind ortsfest zu dem Gehäuse, andere der Drehachsen sind relativ verschiebbar zu dem Gehäuse.

Bei einer bevorzugten Betätigungseinrichtung befinden sich bei nicht betätigtem Betätigungsgriff die Schwinge und die Koppel in einer Strecklage zueinander. So lässt sich eine geeignete Totpunktlage erzeugen. Besonders bevorzugt liegen dann die zweite Drehachse, die dritte Drehachse, und die vierte Drehachse derart zueinander, dass sie durch eine Gerade miteinander verbindbar sind, das heißt auf einer Linie. Dadurch kann die Bewegung des Betätigungsgriffs ohne jeden Leerweg zu einer Bewegung der Schnittstelle führen.

Das um die erste Drehachse drehbar am Gehäuse gelagerte Bauteil, das insbesondere die Schnittstelle aufweisen kann oder die Schnittstelle sein kann, kann zudem ein Indikator sein, der durch seine Winkellage um die erste Drehachse den Verriegelungszustand des mindestens einen Verriegelungsmechanismus anzeigt.

Ein Fahrzeugsitz mit mindestens einem Verriegelungsmechanismus und einer erfindungsgemäßen Betätigungseinrichtung ist besonders ergonomisch bedienbar. Bei einem Fahrzeugsitz mit zwei Schwenkrichtungen verlaufen in beiden Schwenkrichtungen die Bedienrichtung des Betätigungsgriffs und die Schwenkrichtung des Fahrzeugsitzes immer in die gleiche Richtung. Ein Fahrzeugsitz mit einem Sitzlängseinsteller und einer erfindungsgemäßen Betätigungseinrichtung lässt sich von einer neben dem Fahrzeugsitz stehenden Person ergonomisch vorteilhaft nach vorne und hinten verschieben.

Der Fahrzeugsitz kann beispielsweise zwischen wenigstens einer zur Personenbeförderung geeigneten Gebrauchsstellung und einer gegenüber der Gebrauchsstellung in Fahrtrichtung weiter vorne angeordneten Einstiegsstellung bewegbar sein, wenn der mindestens eine Verriegelungsmechanismus in einem entriegelten Zustand ist. Vorzugsweise ist die Betätigungseinrichtung in einem oberen Bereich einer Lehne des Fahrzeugsitzes angeordnet, so dass mit einer Bedienbewegung der mindestens eine Verriegelungsmechanismus entriegelt und die Lehne des Fahrzeugsitzes bewegt werden kann.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:

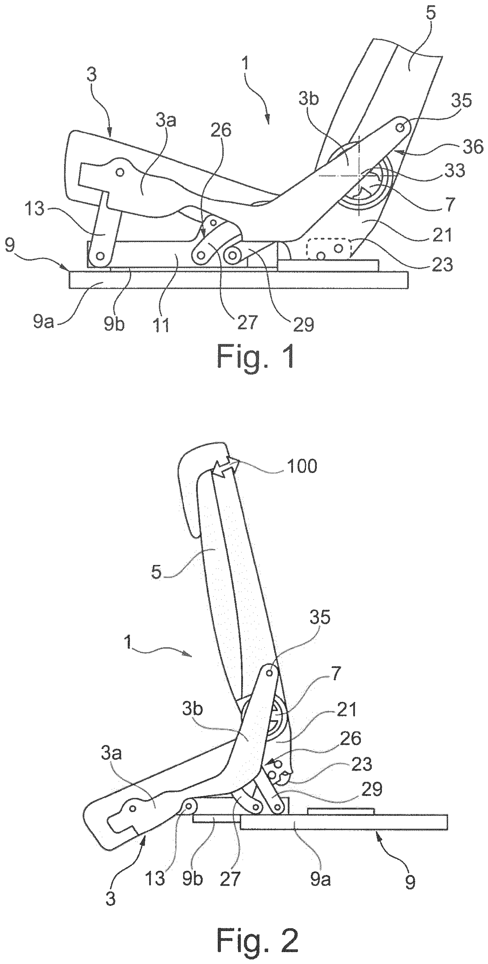

- Fig. 1:: eine teilweise geschnitten dargestellte Seitenansicht eines Fahrzeugsitzes in einer Gebrauchsstellung,
- Fig. 2:: eine Fig. 1 entsprechende Ansicht des Fahrzeugsitzes in einer Einstiegsstellung mit schematisch dargestellter Betätigungseinrichtung,

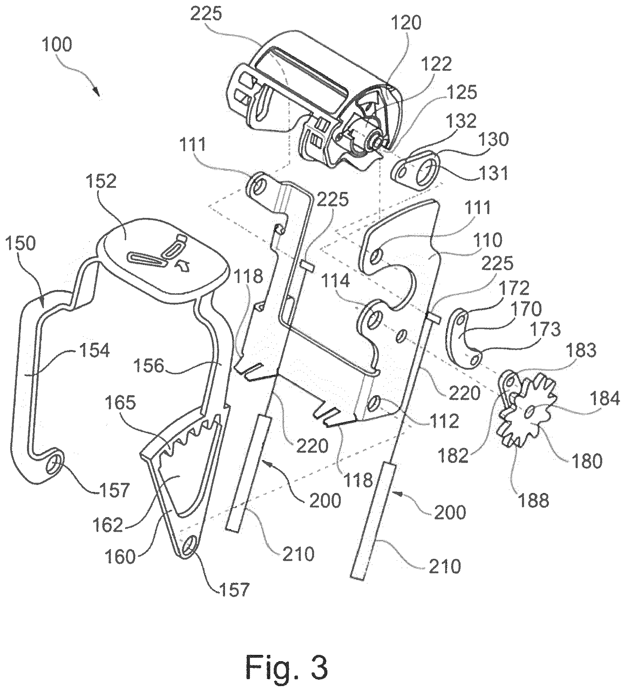

- Fig. 3:: eine Explosionsdarstellung einer erfindungsgemäßen Betätigungseinrichtung,
- Fig. 4:: eine Seitenansicht auf die Betätigungseinrichtung aus Fig. 3 in einem unbetätigten Zustand (entspricht einer Nullstellung),
- Fig. 5:: eine Fig. 4 entsprechende Ansicht während des Schwenkens des Betätigungsgriffs nach vorne (um etwa 5° gegenüber der Nullstellung),
- Fig. 6:: eine Fig. 4 entsprechende Ansicht während des Schwenkens des Betätigungsgriffs nach vorne (um etwa 10° gegenüber der Nullstellung),
- Fig. 7:: eine Fig. 4 entsprechende Ansicht während des Schwenkens des Betätigungsgriffs nach vorne (um etwa 15° gegenüber der Nullstellung),
- Fig. 8:: eine Fig. 4 entsprechende Ansicht mit einem vollständig nach vorne geschwenkten Betätigungsgriff (um etwa 21° gegenüber der Nullstellung),
- Fig. 9:: eine Fig. 7 entsprechende Ansicht während des Zurückschwenkens des Betätigungsgriffs aus der vordersten Stellung nach hinten in Richtung der Nullstellung, (etwa 15° nach vorne gegenüber Nullstellung),
- Fig. 10:: eine Fig. 6 entsprechende Ansicht während des Zurückschwenkens des Betätigungsgriffs aus der vordersten Stellung nach hinten in Richtung der Nullstellung, (etwa 10° nach vorne gegenüber Nullstellung),
- Fig. 11:: eine Fig. 5 entsprechende Ansicht während des Zurückschwenkens des Betätigungsgriffs aus der vordersten Stellung nach hinten in Richtung der Nullstellung, (etwa 5° nach vorne gegenüber Nullstellung),
- Fig. 12:: eine Fig. 4 entsprechende Ansicht nach einem vollständigen Zurückschwenken des Betätigungsgriffs in die Nullstellung,
- Fig. 13:: eine Fig. 4 entsprechende Ansicht während des Schwenkens des Betätigungsgriffs nach hinten (um etwa 5° gegenüber der Nullstellung),
- Fig. 14:: eine Fig. 4 entsprechende Ansicht während des Schwenkens des Betätigungsgriffs nach hinten (um etwa 10° gegenüber der Nullstellung) und
- Fig. 15:: eine Fig. 4 entsprechende Ansicht mit einem vollständig nach hinten geschwenkten Betätigungsgriff (um etwa 17° gegenüber der Nullstellung).

Ein Fahrzeugsitz 1, der beispielsweise als Außensitz einer mittleren oder hinteren Sitzreihe eines Kraftfahrzeuges, beispielsweise eines Vans, vorgesehen ist, weist ein Sitzkissen 3 und eine Lehne 5 auf. Bei den nachfolgenden Richtungsangaben wird davon ausgegangen, dass der Fahrzeugsitz 1 in Vorwärtsfahrtrichtung im Kraftfahrzeug angeordnet ist, wobei in einer zur Personenbeförderung geeigneten Gebrauchsstellung des Fahrzeugsitzes 1 die Lehne 5 im Bereich des hinteren Endes des Sitzkissens 3 angeordnet ist. Die Lehne 5 ist vorliegend mittels Beschlägen 7 in ihrer Neigung einstellbar, so dass mehrere Gebrauchsstellungen definiert sind. Unter dem Begriff Sitzkissen 3 soll die gesamte Baugruppe, bestehend aus einer Struktur, vorliegend ein Sitzkissenträger 3a, und einem bezogenen Polster, verstanden werden. Soweit Bauteile am Sitzkissen 3 angelenkt sind, ist hierunter eine Anlenkung an der Struktur des Sitzkissens 3 zu verstehen. Entsprechendes gilt für die Lehne 5. Die Grundzüge des Aufbaus der Struktur des Fahrzeug-sitzes 1 sind bereits in der WO 02/22391 A1 beschrieben, deren diesbezüglicher Offenbarungsgehalt ausdrücklich einbezogen wird.

Im Folgenden wird der Einfachheit halber nur die linke Fahrzeugsitzseite des im wesentlichen symmetrischen Fahrzeugsitzes 1 beschrieben, d.h. die nachfolgend genannten Bauteile sind, wenn nicht abweichend beschrieben, doppelt (ggf. spiegelsymmetrisch) vorhanden. Zunächst wird der Fahrzeugsitz 1 in einer speziellen Gebrauchsstellung, nämlich der Designstellung, beschrieben, in welcher die Lehne 5 um beispielsweise 23° gegenüber der Vertikalen nach hinten geneigt ist. Eine Basis 9 des Fahrzeugsitzes 1 ist mit der Struktur des Kraftfahrzeuges verbunden.

Die Basis 9 ist im Ausführungsbeispiel als Sitzschienenanordnung ausgebildet, welche die Möglichkeit einer Längseinstellung des Fahrzeugsitzes 1 eröffnet, kann aber alternativ als ein einziges, fest mit der Fahrzeugstruktur verbundenes Bauteil ausgebildet oder die Fahrzeugstruktur selbst sein. Die verschiedenen Varianten der Basis 9 können auch zu einem Baukastensystem zusammengefasst sein. Die Basis 9 weist vorliegend eine direkt mit der Fahrzeugstruktur verbundene erste Sitzschiene 9a und eine relativ zu dieser in Längsrichtung verschiebbare zweite Sitzschiene 9b auf. Die beiden im wesentlichen U-förmig profilierten Sitzschienen 9a und 9b hintergreifen einander wechselseitig mit ihren nach innen bzw. nach außen gebogenen Längsrändern und sind - mittels einer an sich bekannten Schienenverriegelung - miteinander verriegelbar.

An der Basis 9 ist ein vorderer Fuß 11 angebracht, und zwar vorliegend fest mit der zweiten Sitzschiene 9b verbunden. Der vordere Fuß 11 könnte aber auch lösbar mit der Basis 9 verriegelt sein. Am vorderen Fuß 11 ist mittels einer Sitzkissenschwinge 13 das Sitzkissen 3 angelenkt, wobei diese Sitzkissenschwinge 13 an beiden Enden mit Drehgelenken versehen ist, von denen eines die Anlenkung am vorderen Fuß 11 und das andere die Anlenkung am vorderen Ende des Sitzkissens 3 bildet.

An der Basis 9 ist ferner in Fahrtrichtung hinter dem vorderen Fuß 11 ein vom vorderen Fuß 11 gesondert ausgebildeter hinterer Fuß 21 angeordnet, welcher mittels eines am hinteren Fuß 21 angebrachten Verriegelungsmechanismus, vorliegend einem Schloss 23, lösbar mit der Basis 9 verriegelt ist, genauer gesagt mit einem basisfesten Gegenelement, beispielsweise einem Bolzen in der zweiten Sitzschiene 9b, verriegelt, und damit indirekt mit der Fahrzeugstruktur verbunden ist.

Zudem ist der hintere Fuß 21 mittels eines Hinterfuß-Viergelenks 26 am vorderen Fuß 11 angelenkt, wobei die vier Getriebeglieder des Hinterfuß-Viergelenks 26 einen ersten Lenker 27 und einen in Fahrtrichtung hinter dem ersten Lenker 27 angeordneten zweiten Lenker 29 umfassen, die jeweils an beiden Enden Drehgelenke aufweisen. Somit ist der hintere Fuß 21 mittels der Lenker 27 und 29 gelenkig mit der Basis 9 verbunden. In den Gebrauchsstellungen wird das Hinterfuß-Viergelenk 26 mittels des Schlosses 23 verriegelt gehalten. Am hinteren Fuß 21 ist auch ein erstes Beschlagteil des Beschlages 7 angebracht, während ein relativ zu dem ersten Beschlagteil, um eine Lehnenschwenkachse 33, schwenkbares und mit diesem verriegelbares zweites Beschlagteil des Beschlages 7 an der Lehne 5 befestigt ist. Die Lehne 5 ist somit mittels des Beschlags 7 in ihrer Neigung relativ zum hinteren Fuß 21 einstellbar. Die Lehnenschwenkachse 33 verläuft horizontal zwischen beiden Fahrzeugsitzseiten und kann bei körperlicher Ausbildung als Übertragungsstange zwischen den beidseitig vorhandenen Beschlägen 7 dienen.

Das Sitzkissen 3 ist beidseitig mittels genau eines Gelenks 35 unmittelbar an der Lehne 5 angelenkt. Hierzu ist der rahmenförmige Sitzkissenträger 3a, genauer gesagt dessen beiden Seitenteile, in Fahrtrichtung betrachtet hinten mit einem Arm 3b versehen, der vorliegend am Sitzkissenträger 3a angeformt ist und schräg nach oben (und hinten) absteht. Am Ende des Armes 3b ist das Gelenk 35 angeordnet. Das Gelenk 35 ist versetzt zur Lehnenschwenkachse 33 angeordnet und weist eine zur Lehnenschwenkachse 33 parallele Schwenkachse auf. In der Designstellung befindet sich das Gelenk 35 oberhalb und in Fahrrichtung betrachtet hinter der Lehnenschwenkachse 33. Die beiden Drehgelenke der Sitzkissenschwinge 13, der die Lehnenschwenkachse 33 aufweisende Beschlag 7 und das Gelenk 35 bilden ein weiteres Viergelenk, im Folgenden als Kissen-Viergelenk 36 bezeichnet. In den Gebrauchsstellungen wird dieses Kissen-Viergelenk 36 durch den Beschlag 7 verriegelt gehalten.

Bei der Neigungseinstellung der Lehne 5 wird auf jeder Fahrzeugsitzseite der Beschlag 7 entriegelt, die Lehne 5 um die Lehnenschwenkachse 33 in die gewünschte Stellung geschwenkt, wobei sich auch das Kissen-Viergelenk 36 bewegt, und anschließend jeder Beschlag 7 wieder verriegelt. Die Bewegung des Kissen-Viergelenks 36 ändert auch die Neigung des Sitzkissens 3 etwas. Die Lehne 5 kann auch flach nach hinten geschwenkt werden, so dass der Fahrzeugsitz 1 eine Liegestellung einnimmt.

Zum Überführen des Fahrzeugsitzes 1 in eine Einstiegsstellung als eine ausgezeichnete Nichtgebrauchsstellung wird das Schloss 23 mittels einer Betätigungseinrichtung 100 entriegelt. Der hintere Fuß 21 wird nun mittels des Hinterfuß-Viergelenks 26, d.h. mittels der Lenker 27 und 29, nach vorne versetzt, d.h. durch die Überlagerung mehrere Schwenkbewegungen wird der hintere Fuß 21 relativ zur Basis 9 nach oben und vorne bewegt, wodurch er sich von der Basis 9 entfernt. Der Beschlag 7 bleibt jeweils verriegelt. Dadurch ist die Lehne 5 in starrer Anordnung relativ zum hinteren Fuß 21, schwenkt aber insgesamt nach vorne. Die nach vorne schwenkende Sitzkissenschwinge 13 senkt das vordere Ende des Sitzkissens 3 ab, während die Versatzbewegung des hinteren Fußes 21 das hintere Ende des Sitzkissens 3 anhebt.

Wenn die Einstiegsstellung erreicht ist, in welcher der Zugang zu einer hinteren Sitzreihe erleichtert ist, verriegelt das Schloss 23 mit einem in den Figuren nicht dargestellten Bolzen des vorderen Fußes 11, das heißt der hintere Fuß 21 und der vordere Fuß 11 sind miteinander verriegelt. Die Rückkehr in die zuvor eingenommene Gebrauchsstellung erfolgt durch erneutes Betätigen der Betätigungseinrichtung 100 und einem daraus resultierenden Entriegeln des Schlosses 23. Nach dem Entriegeln des Schlosses 23 erfolgt das Zurückschwenken in umgekehrter Reihenfolge der beschriebenen Schritte.

Optional wird beim Übergang von der Gebrauchsstellung in die Einstiegsstellung die Verriegelung der Sitzschienen 9a und 9b entriegelt, so dass die zweite Sitzschiene 9b nach vorne verfahrbar ist, was den Raum hinter dem Fahrzeugsitz 1, also das Einstiegsmaß, vergrößert und den Zugang zusätzlich erleichtert. Bevorzugt ist eine zwangsgesteuerte Entriegelung der Sitzschienen 9a und 9b, beispielsweise indem einer der Lenker 27 und 29 beim Schwenken die Entriegelung betätigt. Alternativ ist auch eine andere Reihenfolge möglich.

Im oberen Bereich der Lehne 5 ist die Betätigungseinrichtung 100 angeordnet, die einem Entriegeln der beiden Schlösser 23 dient. Auf beiden Seiten des im Wesentlichen symmetrischen Fahrzeugsitzes 1 ist jeweils ein Schloss 23 vorgesehen, deren Anordnung und Funktion im Wesentlich identisch sind.

Die Betätigungseinrichtung 100 umfasst ein Gehäuse 110, einen Indikator 120, einen Exzenter 130, einen Hebel 150, eine Koppel 170 und ein Zwischenrad 180, deren detaillierter Aufbau und deren Zusammenwirken nachfolgend beschrieben ist.

Das Gehäuse 110 ist vorliegend ein weitgehend U-förmiger Metallbügel mit zwei Gehäuseschenkeln und einem diese beiden Gehäuseschenkel miteinander verbindenden Steg. Das Gehäuse 110 kann jedoch auch aus einem anderen Werkstoff und mit einer anderen Geometrie ausgebildet sein.

Zwei kreisrunde erste Gehäuseöffnungen 111 sind in einem Bereich von jeweils von dem Steg abgewandten Enden der beiden Gehäuseschenkel vorgesehen. Die Mittelachsen der ersten Gehäuseöffnungen 111 fluchten miteinander und verlaufen in einer Querrichtung zur Fahrtrichtung. Die Querrichtung verläuft horizontal und senkrecht zur Fahrtrichtung. Zwei kreisrunde zweite Gehäuseöffnungen 112 sind im Bereich der dem Steg zugewandten Enden der beiden Gehäuseschenkel vorgesehen. Die Mittelachsen der zweiten Gehäuseöffnungen 112 fluchten miteinander und verlaufen ebenfalls in Querrichtung.

Eine kreisrunde dritte Gehäuseöffnung 114 befindet sich in einem der beiden Gehäuseschenkel des Gehäuses 110 zwischen einer der beiden ersten Gehäuseöffnungen 111 und einer der beiden zweiten Gehäuseöffnungen 112. Der Steg des Gehäuses 110 weist zudem zwei Abstützgabeln 118 auf.

Der Indikator 120 hat eine zylindrische Grundform, deren Mittelachse in Querrichtung verläuft und weist zwei auf dieser Mittelachse liegende, gestufte Zapfen 122 auf, die in die ersten Gehäuseöffnungen 111 derart eingreifen, dass der Indikator 120 um eine mit der Mittelachse identische erste Drehachse D1 drehbar in dem Gehäuse 110 gelagert ist.

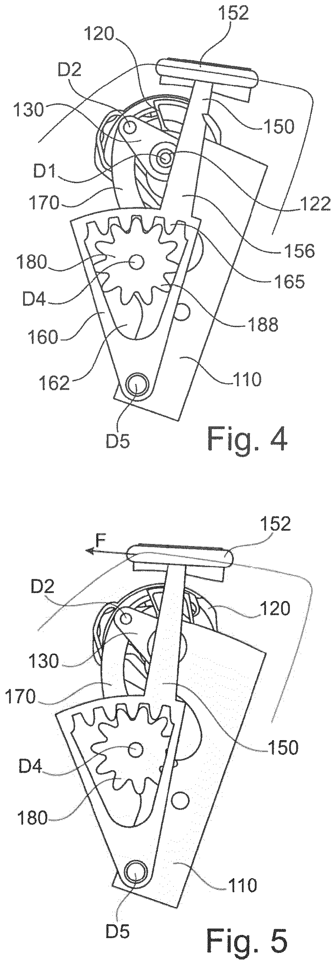

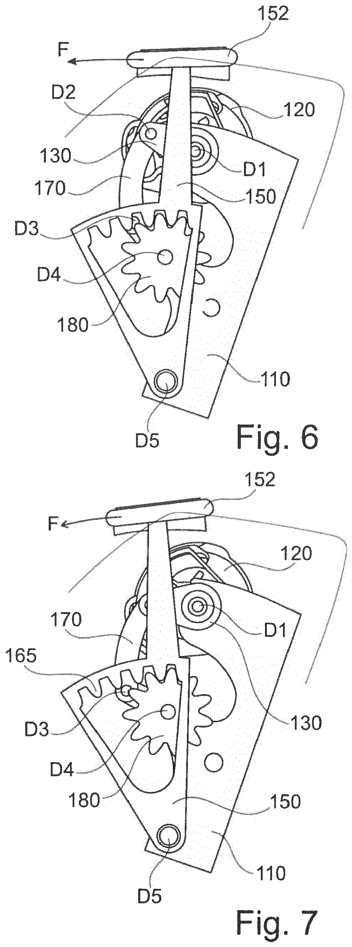

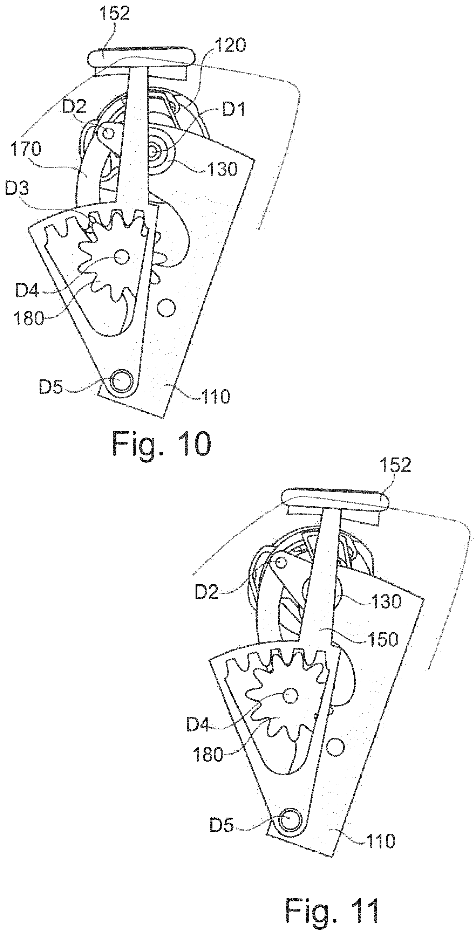

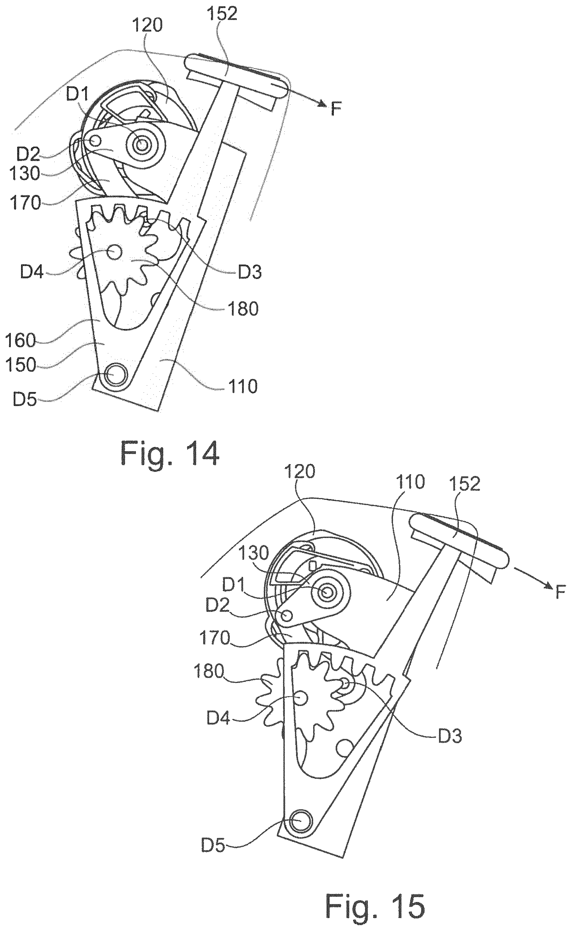

Der Indikator 120 weist zwei als Seilzugeinhängungen 125 ausgebildete Schnittstellen auf, an denen die Enden zweier Seilzüge 220 zweier als Bowdenzüge 200 ausgebildeter Verbindungsmittel befestigt sind. Vorliegend ist jeweils eine an jedem Seilzugende angeformte Tonne 225 in einen Schlitz der Seilzugeinhängung 125 eingehangen. Jeder Bowdenzug 200 umfasst zudem eine Hülle 210, deren eines Ende sich an einer der beiden Abstützgabeln 118 abstützt und deren gegenüberliegendes Ende an der Sitzstruktur im Bereich der Schlösser 23 abgestützt ist. Die beiden anderen Enden der Seilzüge 210 sind an jeweils einem der beiden Schlösser 23 derart befestigt, dass eine Drehung des Indikators 120 in eine, in den Figuren 4 bis 15 gegen den Uhrzeigersinn orientierte, Entriegelungsrichtung zu einem Entriegeln der Schlösser 23 führt. Die Winkellage des Indikators 120 dient auch der Indizierung, ob die beiden Schlösser 23 in einem verriegelten oder in einem entriegelten Zustand sind. Dazu weist der Indikator 120 in an sich bekannter Weise farblich markierte Felder auf.

Der Exzenter 130 weist eine ebene, tropfenförmige Geometrie mit einem ersten Exzenterloch 131 und einem zweiten Exzenterloch 132 auf, die jeweils kreisrund ausgebildet und zueinander versetzt angeordnet sind. Die Mittelachse des ersten Exzenterlochs 131 fluchtet mit der ersten Drehachse D1, also mit der Mittelachse des Indikators 120. Im Bereich des ersten Exzenterlochs 131 ist der Exzenter 130 fest mit einem Zapfen 122 des Indikators 120 verbunden, insbesondere auf diesen aufgeschrumpft oder mit diesem verschweißt. Diese Verbindung kann alternativ beispielsweise auch mittels eines Keilwellenprofils erfolgen. Dadurch ist der Exzenter 130 gemeinsam mit dem Indikator 120 drehbar um die erste Drehachse D1. Das zweite Exzenterloch 132 liegt exzentrisch zu der ersten Drehachse D1 auf einer zweiten Drehachse D2.

Der Hebel 150 ist mittels zweier in den Figuren nicht dargestellter Nietbolzen, die jeweils eines von zwei Hebellöchern 157 und eine der beiden zweiten Gehäuseöffnungen 112 durchgreifen, drehbar um eine fünfte Drehachse D5 an dem Gehäuse 110 angelenkt. Der Hebel 150 hat eine annähernd U-förmige Gestalt mit einem ersten Schenkel 154, einem zweiten Schenkel 156 und einem die beiden Schenkel 154, 156 miteinander verbindenden Betätigungsgriff 152. Die fünfte Drehachse D5 befindet sich in Bereichen der von dem Betätigungsgriff 152 abgewandeten Enden der Schenkel 154, 156.

Der zweite Schenkel 156 umfasst ein Zahnsegment 160, das eine dreieckförmige Zahnsegmentöffnung 162 aufweist, die in dem zweiten Schenkel 156 ausgebildet ist. Eine Seite der Zahnsegmentöffnung 162 weist eine erste Verzahnung 165 auf, die zwischen der fünften Drehachse D5 und dem Betätigungsgriff 152 des Hebels 150 angeordnet und um die fünfte Drehachse D5 gekrümmt ausgebildet ist. Ein Schwenken des Betätigungsgriffs 152 führt somit zu einer Bewegung der ersten Verzahnung 165 um die fünften Drehachse D5.

Die Koppel 170 hat eine ebene, nierenförmige Geometrie mit zwei Enden. An einem der beiden Enden ist ein, insbesondere kreisrundes, erstes Koppelloch 172, an dem anderen der beiden Enden ein, insbesondere kreisrundes, zweites Koppelloch 173 vorgesehen. Der Exzenter 130 ist drehbar um die zweite Drehachse D2 mit der Koppel 170 verbunden. Dazu fluchtet das erste Koppelloch 172 mit dem zweiten Exzenterloch 132. Ein in den Figuren nicht dargestellter Nietbolzen durchdringt das erste Koppelloch 172 und das zweite Exzenterloch 132.

Das zweite Koppelloch 173 fluchtet mit einer Schwingenöffnung 183 einer Schwinge 182 des Zwischenrades 180. Die Koppel 170 ist drehbar um eine dritte Drehachse D3 mit der Schwinge 182 des Zwischenrades 180 verbunden, indem ein in den Figuren nicht dargestellter Nietbolzen das zweite Koppelloch 173 und die Schwingenöffnung 183 der Schwinge 182 durchragt.

Das Zwischenrad 180 ist ein Ritzel mit einer zweiten Verzahnung 188. Das Zwischenrad 180 ist mittels einer Radachse 184 um eine vierte Drehachse D4 drehbar in der dritten Gehäuseöffnung 114 gelagert. Die Schwinge 182 steht (bezogen auf die Radachse 184) in radialer Richtung von dem Zwischenrad 180 ab, ist axial versetzt zur zweiten Verzahnung 188 und ragt in radialer Richtung über die zweite Verzahnung 188 hinaus. Im Bereich des von der Radachse 184 abgewandten Endes der Schwinge 182 weist diese die kreisrunde Schwingenöffnung 183 auf, die ebenfalls in radialer Richtung über die zweite Verzahnung 188 hinaus ragt.

Die zweite Verzahnung 188 des Zwischenrads 180 ist in Eingriff mit der ersten Verzahnung 165 des Hebels 150, so dass ein Schwenken des Hebels 150 das Zwischenrad 180 dreht.

Die Drehachsen D1, D2, D3, D4 und D5 verlaufen, bis auf eventuell toleranzbedingte Abweichungen, parallel zueinander.

Das Gehäuse 110, der Exzenter 130, die Koppel 170 und die Schwinge 182 des Zwischenrads 180 sind Bestandteile einer Viergelenkkette, deren Gelenkpunkte in der zuvor beschriebenen Weise auf den Drehachsen D1, D2, D3 und D4 liegen. Eine Drehung des Zwischenrades 180 führt aufgrund dieser Viergelenkkette zu einer Drehung des mit dem Exzenter 130 verbundenen Indikators 120, der über die Bowdenzüge 200 mit den Schlössern 23 wirkverbunden ist.

In einem unbetätigten Zustand der Betätigungseinrichtung 100, die nachfolgend auch als Nullstellung bezeichnet ist, befindet sich der Hebel 150 aufgrund einer Federvorspannung in einer Mittellage eines Winkelfeldes, innerhalb dessen der Hebel 150 um die fünfte Drehachse D5 schwenken kann. Das Winkelfeld ist über zwei in den Figuren nicht dargestellte Anschläge, die zwischen dem Hebel 150 und dem Gehäuse 110 wirken, definiert.

In der Nullstellung der Betätigungseinrichtung 100 befindet sich der Fahrzeugsitz 1 in einer verriegelten Stellung, das heißt die beiden Schlösser 23 sind verriegelt. Diese verriegelte Nullstellung kann vorliegend sowohl der Gebrauchsstellung als auch der Einstiegsstellung des Fahrzeugsitzes 1 zugeordnet sein.

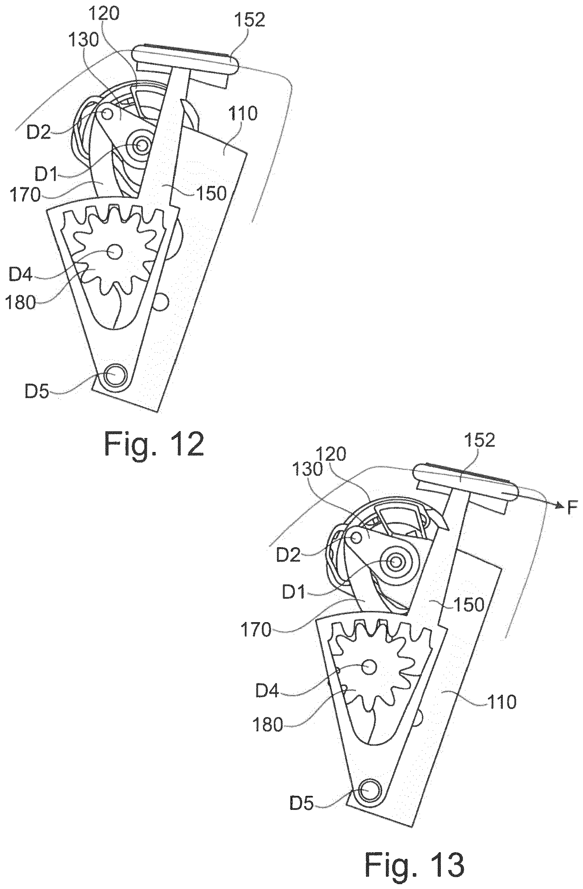

Die Figuren 4 und 12 zeigen die Nullstellung der Betätigungseinrichtung 100, sind also identisch. Der Zahneingriff zwischen der ersten Verzahnung 165 und der zweiten Verzahnung 188 befindet sich annähernd in der Mitte der ersten Verzahnung 165. Die Schwinge 182 und die Koppel 170 sind annähernd in einer Strecklage (obere Totpunktlage der Schwinge 182), so dass eine Drehung des Zwischenrades 180 um die vierte Drehachse D4 unabhängig von der Drehrichtung des Zwischenrades 180 den Exzenter 130 in Richtung der vierten Drehachse D4 zieht und damit den Indikator 120 in dieselbe Drehrichtung dreht, in den Figuren 4 bis 15 entgegen dem Uhrzeigersinn.

Ausgehend von der Nullstellung ist, unabhängig von der Drehrichtung des Zwischenrades 180, die Drehrichtung des Indikators 120 immer dieselbe. Der das Zwischenrad 180 antreibende Hebel 150 kann somit zum Öffnen der Schlösser 23 in beide Richtungen um die fünfte Drehachse D5 geschwenkt werden.

Für eine ergonomische Bedienung des Fahrzeugsitzes 1 wird der Betätigungsgriff 152 der Betätigungseinrichtung 100 zum Entriegeln der Schlösser 23 und einem anschließendem Vorschwenken des Fahrzeugsitzes 1 aus der Gebrauchsstellung in die Einstiegsstellung mit einer Betätigungskraft F nach vorne und somit in Bewegungsrichtung des Fahrzeugsitzes 1 gezogen, wie in den Figuren 5 bis 8 dargestellt.

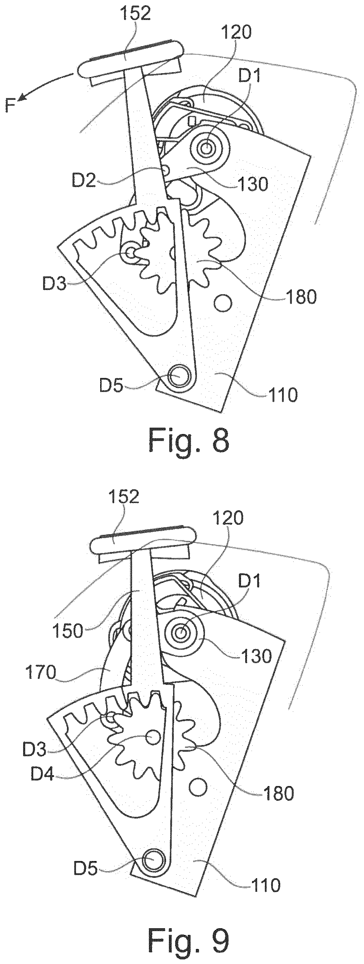

Sobald die Betätigungskraft F entfällt, das heißt sobald der Betätigungsgriff 152 losgelassen wird, schwenkt eine in den Figuren nicht dargestellte Feder den Betätigungsgriff 152, wie in den Figuren 9 bis 11 dargestellt, zurück, bis dieser wieder die Nullstellung (Figur 12) erreicht hat.

Zum Entriegeln der Schlösser 23 und einem anschließenden Zurückschwenken des Fahrzeugsitzes 1 aus der Einstiegsstellung in die Gebrauchsstellung wird der Betätigungsgriff 152 mit einer Betätigungskraft F nach hinten und somit in Bewegungsrichtung des Fahrzeugsitzes 1 gezogen, wie in den Figuren 13 bis 15 dargestellt.

Abweichend von dem beschriebenen Bewegungsablauf kann der Betätigungsgriff 152 grundsätzlich auch in die jeweils andere Richtung betätigt werden. Dies ist jedoch aus ergonomischer Sicht weniger sinnvoll.

Die beschriebene Betätigungseinrichtung 100 dient vorliegend zur Betätigung der Schlösser 23. Grundsätzlich kann eine solche Betätigungseinrichtung aber auch für die Betätigung von allen an sich bekannten Verriegelungsmechanismen in Fahrzeugsitzen eingesetzt werden, insbesondere auch zum Betätigen von Sitzschienen und Lehneneinstellern. Dabei können die Fahrzeugsitze unterschiedlichste Bewegungskinematiken aufweisen.

### Bezugszeichenliste

- 1: Fahrzeugsitz
- 3: Sitzkissen
- 3a: Sitzkissenträger
- 3b: Arm
- 5: Lehne
- 7: Beschlag
- 9: Basis
- 9a: erste Sitzschiene
- 9b: zweite Sitzschiene
- 11: vorderer Fuß
- 13: Schwinge
- 21: hinterer Fuß
- 23: Schloss, Verriegelungsmechanismus
- 26: Hinterfuß-Viergelenk
- 27: erster Lenker
- 29: zweiter Lenker
- 33: Lehnenschwenkachse
- 35: Gelenk
- 36: Kissen-Viergelenk
- 100: Betätigungseinrichtung
- 110: Gehäuse
- 111: erste Gehäuseöffnung
- 112: zweite Gehäuseöffnung
- 114: dritte Gehäuseöffnung
- 118: Abstützgabel
- 120: Indikator
- 122: Zapfen
- 125: Schnittstelle, Seilzugeinhängung
- 130: Exzenter
- 131: erstes Exzenterloch
- 132: zweites Exzenterloch
- 150: Hebel
- 152: Betätigungsgriff
- 154: erster Schenkel
- 156: zweiter Schenkel
- 157: Hebelloch
- 160: Zahnsegment
- 162: Zahnsegmentöffnung
- 165: erste Verzahnung
- 170: Koppel
- 172: erstes Koppelloch
- 173: zweites Koppelloch
- 180: Zwischenrad, Ritzel
- 182: Schwinge
- 183: Schwingenöffnung
- 184: Radachse
- 188: zweite Verzahnung
- 200: Verbindungsmittel, Bowdenzug
- 210: Hülle
- 220: Seilzug
- 225: Tonne
- D1: erste Drehachse
- D2: zweite Drehachse
- D3: dritte Drehachse
- D4: vierte Drehachse
- D5: fünfte Drehachse
- F: Betätigungskraft

## Patentansprüche

1. Betätigungseinrichtung (100) für einen mindestens einen Verriegelungsmechanismus (23) aufweisenden Fahrzeugsitz (1), wobei die Betätigungseinrichtung (100) zum Entriegeln des mindestens einen Verriegelungsmechanismus (23) einen an einem Gehäuse (110) gelagerten Betätigungsgriff (152) aufweist, und wobei ein Verbindungsmittel (200) die Betätigungseinrichtung (100) mit dem mindestens einen Verriegelungsmechanismus (23) koppelt, wobei der Betätigungsgriff (152) in zwei unterschiedliche Richtungen betätigbar ist und der mindestens eine Verriegelungsmechanismus (23) sowohl durch eine Betätigung des Betätigungsgriffs (152) in die eine Richtung, als auch durch eine Betätigung des Betätigungsgriffs (152) in die andere Richtung entriegelbar ist, und wobei die Betätigungseinrichtung (100) eine relativ zu dem Gehäuse (110) bewegliche Schnittstelle (125) zur Befestigung des Verbindungsmittels (200) aufweist, die Schnittstelle (125) mit dem Betätigungsgriff (152) wirkverbunden ist, und bei einer Betätigung des Betätigungsgriffs (152) die Bewegungsrichtung der Schnittstelle (125) unabhängig von der Betätigungsrichtung des Betätigungsgriffs (152) ist,
**dadurch gekennzeichnet, dass**
der Betätigungsgriff (152) ein mit der Schnittstelle (125) wirkverbundenes Getriebe (130, 160, 170, 180, 182) antreibt, und sich einzelne Getriebeglieder dieses Getriebes (130, 170, 180, 182) bei nicht betätigtem Betätigungsgriff (152) in einer Totpunktlage befinden.

2. Betätigungseinrichtung (100) nach Anspruch 1, **dadurch gekennzeichnet, dass** der Hebel (150) in einem unbetätigten Zustand durch ein elastisches Mittel in einer Mittellage gehalten ist, und der Hebel (150) aus dieser Mittellage heraus wahlweise in eine der beiden Richtungen betätigbar ist.

3. Betätigungseinrichtung (100) nach Anspruch 2, **dadurch gekennzeichnet, dass** das elastisches Mittel eine Feder ist.

4. Betätigungseinrichtung (100) nach Anspruch 2 oder 3, **dadurch gekennzeichnet, dass** das elastische Mittel zwischen dem Gehäuse (110) und dem Hebel (150) wirkt.

5. Betätigungseinrichtung (100) nach einem der Ansprüche 1 bis 4, **dadurch gekennzeichnet, dass** das Verbindungsmittel (200) ein Seilzug oder ein Bowdenzug ist.

6. Betätigungseinrichtung (100) nach einem der Ansprüche 1 bis 5, **dadurch gekennzeichnet, dass** sich in der Totpunktlage zwei Getriebeglieder (170, 182) des Getriebes (130, 160, 170, 180, 182) in einer Strecklage zueinander befinden.

7. Betätigungseinrichtung (100) nach einem der Ansprüche 1 bis 6, **dadurch gekennzeichnet, dass** das Getriebe (130, 160, 170, 180, 182) ein mit dem Betätigungsgriff (152) verbundenes Zahnsegment (160), ein mit dem Zahnsegment (160) kämmendes Zwischenrad (180), eine an dem Zwischenrad (180) befestigte Schwinge (182), eine mit der Schwinge (182) verbundene Koppel (170) und einen mit der Koppel (170) verbundenen Exzenter (130) aufweist und die Schnittstelle (125) mit dem Exzenter (130) gekoppelt ist.

8. Betätigungseinrichtung (100) nach Anspruch 7, **dadurch gekennzeichnet, dass** ein um eine erste Drehachse (D1) drehbar am Gehäuse (110) gelagertes Bauteil (120) die Schnittstelle (125), insbesondere starr, mit dem Exzenter (130) verbindet.

9. Betätigungseinrichtung (100) nach Anspruch 7 oder 8, **dadurch gekennzeichnet, dass** der Exzenter (130) drehbar um eine zweite Drehachse (D2) mit der Koppel (170) verbunden ist, die Koppel (170) drehbar um eine dritte Drehachse (D3) mit der Schwinge (182) verbunden ist, das Zwischenrad (180) und die Schwinge (182) drehbar um eine vierte Drehachse (D4) am Gehäuse (110) gelagert sind und das Zahnsegment (160) und der Betätigungsgriff (152) drehbar um eine fünfte Drehachse (D5) am Gehäuse (110) gelagert sind.

10. Betätigungseinrichtung (100) nach Anspruch 9, **dadurch gekennzeichnet, dass** bei nicht betätigtem Betätigungsgriff (152) die Schwinge (182) und die Koppel (170) sich in einer Strecklage zueinander befinden, so dass die zweite Drehachse (D2), die dritte Drehachse (D3), und die vierte Drehachse (D4) durch eine Gerade miteinander verbindbar sind.

11. Betätigungseinrichtung (100) nach einem der Ansprüche 7 bis 10, **dadurch gekennzeichnet, dass** das um die erste Drehachse (D1) drehbar am Gehäuse (110) gelagerte Bauteil ein Indikator (120) ist, der durch seine Winkellage um die erste Drehachse (D1) den Verriegelungszustand des mindestens einen Verriegelungsmechanismus (23) anzeigt.

12. Fahrzeugsitz (1) mit mindestens einem Verriegelungsmechanismus (23) und einer Betätigungseinrichtung (100) nach einem der Ansprüche 1 bis 11.

13. Fahrzeugsitz (1) nach Anspruch 12, **dadurch gekennzeichnet, dass** der Fahrzeugsitz (1) zwischen wenigstens einer zur Personenbeförderung geeigneten Gebrauchsstellung und einer gegenüber der Gebrauchsstellung in Fahrtrichtung weiter vorne angeordneten Einstiegsstellung bewegbar ist, wenn der mindestens eine Verriegelungsmechanismus (23) in einem entriegelten Zustand ist.

14. Fahrzeugsitz (1) nach Anspruch 12 oder 13, **dadurch gekennzeichnet, dass** die Betätigungseinrichtung (100) in einem oberen Bereich einer Lehne (5) des Fahrzeugsitzes (1) angeordnet ist.

## Claims

1. Actuation device (100) for a vehicle seat (1) having at least one locking mechanism (23), wherein the actuation device (100) has an actuation handle (152), which is mounted on a housing (110), for unlocking the at least one locking mechanism (23), and wherein a connecting means (200) couples the actuation device (100) to the at least one locking mechanism (23), wherein the actuation handle (152) is actuable in two different directions, and the at least one locking mechanism (23) is unlockable both by actuation of the actuation handle (152) in the one direction and by actuation of the actuation handle (152) in the other direction,
and wherein the actuation device (100) has an intersecting point (125), which is movable relative to the housing (110), for fastening the connecting means (200), the intersecting point (125) is operatively connected to the actuation handle (152) and, when the actuation handle (152) is actuated, the movement direction of the intersecting point (125) is independent of the actuation direction of the actuation handle (152),
**characterized in that**
the actuation handle (152) drives a gearing (130, 160, 170, 180, 182) which is operatively connected to the intersecting point (125), and, when the actuation handle (152) is not actuated, individual gearing members of said gearing (130, 170, 180, 182) are located in a dead center position.

2. Actuation device (100) according to Claim 1, **characterized in that**, in an unactuated state, the lever (150) is held in a central position by an elastic means, and, from said central position, the lever (150) is selectively actuable in one of the two directions.

3. Actuation device (100) according to Claim 2, **characterized in that** the elastic means is a spring.

4. Actuation device (100) according to Claim 2 or 3, **characterized in that** the elastic means acts between the housing (110) and the lever (150).

5. Actuation device (100) according to one of Claims 1 to 4, **characterized in that** the connecting means (200) is a cable pull or a Bowden cable.

6. Actuation device (100) according to one of Claims 1 to 5, **characterized in that**, in the dead center position, two gearing members (170, 182) of the gearing (130, 160, 170, 180, 182) are in an extended position with respect to each other.

7. Actuation device (100) according to one of Claims 1 to 6, **characterized in that** the gearing (130, 160, 170, 180, 182) has a toothed segment (160) connected to the actuation handle (152), an intermediate wheel (180) meshing with the toothed segment (160), a rocker (182) fastened to the intermediate wheel (180), a coupler (170) connected to the rocker (182), and an eccentric (130) connected to the coupler (170), and the intersecting point (125) is coupled to the eccentric (130).

8. Actuation device (100) according to Claim 7, **characterized in that** a component (120) which is mounted on the housing (110) so as to be rotatable about a first axis of rotation (D1) connects the intersecting point (125), in particular rigidly, to the eccentric (130).

9. Actuation device (100) according to Claim 7 or 8, **characterized in that** the eccentric (130) is connected to the coupler (170) so as to be rotatable about a second axis of rotation (D2), the coupler (170) is connected to the rocker (182) so as to be rotatable about a third axis of rotation (D3), the intermediate wheel (180) and the rocker (182) are mounted on the housing (110) so as to be rotatable about a fourth axis of rotation (D4), and the toothed segment (160) and the actuation handle (152) are mounted on the housing (110) so as to be rotatable about a fifth axis of rotation (D5).

10. Actuation device (100) according to Claim 9, **characterized in that**, when the actuation handle (152) is not actuated, the rocker (182) and the coupler (170) are in an extended position with respect to each other, and therefore the second axis of rotation (D2), the third axis of rotation (D3) and the fourth axis of rotation (D4) are connectable to one another by a straight line.

11. Actuation device (100) according to one of Claims 7 to 10, **characterized in that** the component which is mounted on the housing (110) so as to be rotatable about the first axis of rotation (D1) is an indicator (120) which, by means of its angular position about the first axis of rotation (D1), indicates the locking state of the at least one locking mechanism (23).

12. Vehicle seat (1) with at least one locking mechanism (23) and an actuation device (100) according to one of Claims 1 to 11.

13. Vehicle seat (1) according to Claim 12, **characterized in that** the vehicle seat (1) is movable between at least one use position suitable for conveying an individual and an entry position arranged further forward in the direction of travel in relation to the use position when the at least one locking mechanism (23) is in an unlocked state.

14. Vehicle seat (1) according to Claim 12 or 13, **characterized in that** the actuation device (100) is arranged in an upper region of a backrest (5) of the vehicle seat (1).

## Revendications

1. Dispositif d'actionnement (100) pour un siège de véhicule (1) présentant au moins un mécanisme de verrouillage (23), le dispositif d'actionnement (100), pour le déverrouillage de l'au moins un mécanisme de verrouillage (23), présentant une prise d'actionnement (152) supportée sur un boîtier (110), et un moyen de connexion (200) accouplant le dispositif d'actionnement (100) à l'au moins un mécanisme de verrouillage (23), la prise d'actionnement (152) pouvant être actionnée dans deux directions différentes et l'au moins un mécanisme de verrouillage (23) pouvant être déverrouillé à la fois par un actionnement de la prise d'actionnement (152) dans une direction ainsi que par un actionnement de la prise d'actionnement (152) dans l'autre direction, et le dispositif d'actionnement (100) présentant une interface (125) mobile par rapport au boîtier (110) pour la fixation du moyen de connexion (200), l'interface (125) étant en liaison fonctionnelle avec la prise d'actionnement (152) et lors d'un actionnement de la prise d'actionnement (152), la direction de déplacement de l'interface (125) étant indépendante de la direction d'actionnement de la prise d'actionnement (152),
**caractérisé en ce que** la prise d'actionnement (152) entraîne une transmission (130, 160, 170, 180, 182) en liaison fonctionnelle avec l'interface (125) et des organes individuels de cette transmission (130, 170, 180, 182) sont dans une position de point mort lorsque la prise d'actionnement (152) n'est pas actionnée.

2. Dispositif d'actionnement (100) selon la revendication 1, **caractérisé en ce que** le levier (150) est retenu dans une position centrale dans un état non actionné par un moyen élastique, et le levier (150) peut être actionné hors de cette position centrale de manière sélective dans l'une des deux directions.

3. Dispositif d'actionnement (100) selon la revendication 2, **caractérisé en ce que** le moyen élastique est un ressort.

4. Dispositif d'actionnement (100) selon la revendication 2 ou 3, **caractérisé en ce que** le moyen élastique agit entre le boîtier (110) et le levier (150).

5. Dispositif d'actionnement (100) selon l'une quelconque des revendications 1 à 4, **caractérisé en ce que** le moyen de connexion (200) est un câble de traction ou un câble Bowden.

6. Dispositif d'actionnement (100) selon l'une quelconque des revendications 1 à 5, **caractérisé en ce que** dans la position de point mort, deux organes de transmission (170, 182) de la transmission (130, 160, 170, 180, 182) se trouvent dans une position étirée l'un par rapport à l'autre.

7. Dispositif d'actionnement (100) selon l'une quelconque des revendications 1 à 6, **caractérisé en ce que** la transmission (130, 160, 170, 180, 182) présente un segment denté (160) connecté à la prise d'actionnement (152), une roue intermédiaire (180) s'engrenant avec le segment denté (160), un bras oscillant (182) fixé à la roue intermédiaire (180), une bielle (170) connectée au bras oscillant (182) et un excentrique (130) connecté à la bielle (170) et l'interface (125) est accouplée à l'excentrique (130).

8. Dispositif d'actionnement (100) selon la revendication 7, **caractérisé en ce qu'**un composant (120) supporté sur le boîtier (110) de manière à pouvoir tourner autour d'un premier axe de rotation (D1) relie, notamment rigidement, l'interface (125) à l'excentrique (130).

9. Dispositif d'actionnement (100) selon la revendication 7 ou 8, **caractérisé en ce que** l'excentrique (130) est connecté à la bielle (170) de manière à pouvoir tourner autour d'un deuxième axe de rotation (D2), la bielle (170) est connectée au bras oscillant (182) de manière à pouvoir tourner autour d'un troisième axe de rotation (D3), la roue intermédiaire (180) et le bras oscillant (182) sont supportés sur le boîtier (110) de manière à pouvoir tourner autour d'un quatrième axe de rotation (D4) et le segment denté (160) et la prise d'actionnement (152) sont supportés sur le boîtier (110) de manière à pouvoir tourner autour d'un cinquième axe de rotation (D5).

10. Dispositif d'actionnement (100) selon la revendication 9, **caractérisé en ce que** lorsque la prise d'actionnement (152) n'est pas actionnée, le bras oscillant (182) et la bielle (170) se trouvent dans une position étirée l'un par rapport à l'autre de telle sorte que le deuxième axe de rotation (D2), le troisième axe de rotation (D3) et le quatrième axe de rotation (D4) puissent être connectés les uns aux autres par une droite.

11. Dispositif d'actionnement (100) selon l'une quelconque des revendications 7 à 10, **caractérisé en ce que** le composant supporté sur le boîtier (110) de manière à pouvoir tourner autour du premier axe de rotation (D1) est un indicateur (120) qui indique, par sa position angulaire autour du premier axe de rotation (D1), l'état de verrouillage de l'au moins un mécanisme de verrouillage (23).

12. Siège de véhicule (1) comprenant au moins un mécanisme de verrouillage (23) et un dispositif d'actionnement (100) selon l'une quelconque des revendications 1 à 11.

13. Siège de véhicule (1) selon la revendication 12, **caractérisé en ce que** le siège de véhicule (1) peut être déplacé entre au moins une position d'utilisation appropriée pour transporter des personnes et une position d'accès disposée plus en avant dans la direction de conduite par rapport à la position d'utilisation lorsque l'au moins un mécanisme de verrouillage (23) est dans un état déverrouillé.

14. Siège de véhicule (1) selon la revendication 12 ou 13, **caractérisé en ce que** le dispositif d'actionnement (100) est disposé dans une région supérieure d'un dossier (5) du siège de véhicule (1).
